# EUROPÄISCHE PATENTSCHRIFT

(11) **EP 2 634 019 B1**
(45) Veröffentlichungstag und Bekanntmachung des Hinweises auf die Patenterteilung: **08.04.2015**
(21) Anmeldenummer: 13156166.4
(22) Anmeldetag: 21.02.2013
(51) Int. Cl.: B60G 11/04, B60G 11/113, F16F 1/18, F16F 1/368

(54) **Kraftfahrzeugachsaufhängung mit Längsblattfeder**
Motor vehicle axle suspension with longitudinal leaf spring
Suspension d'axe d'un véhicule automobile avec ressort à lame longitudinal

(30) Priorität: 01.03.2012 DE 102012101730
(43) Veröffentlichungstag der Anmeldung: 04.09.2013
(73) Patentinhaber: Benteler Automobiltechnik GmbH, 33102 Paderborn (DE); Benteler SGL GmbH & Co. KG, 33102 Paderborn (DE)
(72) Erfinder: Schönen, Stephan, 33100 Paderborn (DE); Reineke, Hendrik, 33104 Bad Driburg (DE); Müller, Ulrich, 86462 Langweid am Lech (DE); Kurz, Jan, 4910 Ried im Innkreis (AT); Böke, Johannes, 32825 Blomberg (DE); Drabon, Rodscha, 33154 Salzkotten (DE); Zuber, Armin, 33102 Paderborn (DE)
(74) Vertreter: Griepenstroh, Jörg

(56) Entgegenhaltungen:
- EP-A1- 1 980 425
- WO-A1-2012/075582
- DE-A1-102007 017 991
- DE-B3-102009 021 840
- JP-A- S63 251 638
- US-A- 3 022 991
- US-A- 3 061 301
- US-A- 3 968 958
- US-A- 4 707 317
- US-A- 6 012 709

## Beschreibung

Die vorliegende Erfindung betrifft eine Kraftfahrzeugachsaufhängung umfassend eine Blattfeder aus Faserverbundwerkstoff gemäß den Merkmalen im Oberbegriff von Patentanspruch 1.

Aus dem Stand der Technik ist es bekannt für Achsaufhängungen an Kraftfahrzeugen Blattfedern zu nutzen. Diese Blattfedern werden entweder als Querblattfedern quer zur Fahrtrichtung des Kraftfahrzeuges angeordnet oder aber als Längsblattfedern in Fahrtrichtung des Kraftfahrzeuges angeordnet. An die Blattfeder selbst sind dann Achskomponenten gekoppelt, an denen wiederum die Räder aufgehangen sind. Im Falle der Verwendung von Querblattfedern sind die Achskomponenten mitunter als Mehrlenkerachsen oder aber Querlenkerachsen ausgebildet und kinematisch mit einem Achshilfsrahmen oder aber der Kraftfahrzeugkarosserie gekoppelt. Im Falle des Überfahrens von Hindernissen, mithin im Falle von Radhubbewegungen wird das Rad dann über die kinematische Kopplung geführt und über die Federkraft der Querblattfeder ein bzw. ausgefedert.

Längsblattfedern hingegen übernehmen teilweise auch Führungsaufgaben, also die kinematische Kopplung mit einem Achshilfsrahmen oder der Karosserie zusätzlich zu den Federungsaufgaben. So sind Längsblattfedern oft in Verbindung mit Starrachsen anzutreffen, bei denen dann die Achse an zwei gegenüberliegenden Querblattfedern gekoppelt ist. Somit nimmt die Längsblattfeder Kräfte in Kraftfahrzeug X-, Y- und Z-Richtung auf.

Ursprünglich wurden Blattfedern aus Stahlwerkstoffen hergestellt, seit einigen Jahren erhalten jedoch immer mehr Blattfedern aus Leichtbauwerkstoffen Einzug in den Kraftfahrzeugbau. So werden beispielsweise Blattfedern aus Kunststoffen oder aber auch aus Faserverbundwerkstoffen hergestellt, die analoge Federungseigenschaften zu den Stahlblattfedern aufweisen, gegenüber diesen jedoch ein deutlich geringeres spezifisches Eigengewicht besitzen.

Längsblattfedern werden in einem nicht vorgespannten Zustand in das Kraftfahrzeug eingebaut. Durch die statische Radlast erfährt die Feder anschließend eine Vorspannung. So besitzen Längsblattfedern im ursprünglichen Zustand einen bogenförmigen Verlauf, wobei in der Einbaulage die Bogenform zur Fahrbahnrichtung hin orientiert angeordnet wird. Im eingebauten und aufgrund der statischen Radlast eingefederten Zustand besitzt die Längsblattfeder mithin wiederum einen im Wesentlichen geradlinigen Verlauf. Durch das Ein- oder Ausfedern aufgrund der dynamischen Radkräfte ändert sich dann der Verlauf beim Ausfedern wiederum in einen bogenförmigen Verlauf oder aber beim Einfedern, insbesondere bei einem starken Einfedern in einen dem ursprünglich bogenförmigen Verlauf entgegengesetzten Verlauf.

Besonders problematisch stellt sich der Fall des Bremsens dar, bei dem die Blattfeder aufgrund des über die Achse übertragenen Bremsmomentes einen sogenannten S-Schlag erfährt. Hierbei verformt sich die Blattfeder aufgrund des Bremsmomentes S-förmig, so dass ein bereits aufgrund der statischen Radlast vorgespannter Teil der Feder, im nachfolgenden als Ast bezeichnet, noch weiter gespannt wird, wohingegen der andere Teil der Feder entspannt wird.

Ein Überschreiten eines kritischen Spannungszustandes innerhalb der Feder kann dauerhafte Schäden nach sich führen, ebenfalls verkürzt sich aufgrund einer Dauerschwingbelastung bei öfter auftretenden Belastungsfällen die Lebensdauer der Feder.

Blattfedern aus Faserverbundwerkstoffen sind zumeist als mehrlagige Bauteile ausgebildet. Innerhalb der Blattfeder treten bei Änderung der Spannungszustände Schubspannungen auf, die zwischen den einzelnen Lagen zu einer Entfestigung der Blattfeder führen können. Hierdurch kann es passieren, dass einzelne Faserstränge reißen oder aber brechen oder aber aufgrund des Dauerschwingverhaltens der Feder diese derart geschwächt wird, dass sie eine verkürzte Lebensdauer besitzt.

Aus der CA 2,022,028 A1 ist eine Längsblattfeder bekannt, die eine über ihren Verlauf unterschiedliche Querschnittsgeometrie aufweist, wodurch eine höhere Federsteifigkeit erhalten werden soll, so dass die Bewegung eines Differenzialgehäuses eingeschränkt wird. Die Blattfeder ist ebenfalls aus Faserverbundwerkstoff hergestellt und weist aufgrund der zwar veränderten Querschnittsgeometrie aber gleichbleibenden Querschnittsgröße ein konstantes Gewicht auf, gegenüber einer konventionell hergestellten Feder die keine verändernde Querschnittsgeometrie besitzt.

Weiterhin ist durch die US 6,012,709 A eine modular aufgebaute, zumindest teilweise aus einem Hybridfaserverbundwerkstoff bestehende, Längsblattfeder bekannt, an dessen Ende jeweils zwei Aufnahmeöffnungen vorgesehen sind, die zur Anbindung an die Kraftfahrzeugkarosserie dienen. Mittig an diese Längsblattfeder ist eine Aufnahmemöglichkeit zur Anbindung an ein Achselement gekoppelt, wobei das Achselement über eine U-förmig ausgestaltete Klemmvorrichtung an der Längsblattfeder fixiert werden kann. Weiterhin ist es vorgesehen, dass die Längsblattfeder entlang ihrer Mittellängsachse verschiedene Querschnittsgrößen aufweisen kann.

Eine alternative Ausgestaltung eines elastischen Querlenkers wird durch die EP 1 080 425 A1 offenbart. Hierbei besteht der Querlenker aus mehreren, in ihrer Breite und Höhe variierenden Abschnitten, um neben einer möglichst hohen Gewichtsersparnis trotzdem eine Anordnung bereitzustellen, die den auftretenden Belastungen eines sich bewegenden Kraftfahrzeuges Stand hält.

Zudem zeigt die DE 10 2007 017 991 A1 eine Blattfeder aus einem Faser-Kunststoff-Verbundwerkstoff sowie ein darauf abgestimmtes Krafteinleitungselement. Die Blattfeder weist hierbei in ihrem mittleren Befestigungsabschnitt Einengungen auf, welche senkrecht zu der Längsachse der Blattfeder ausgerichtet sind, um so ein Krafteinleitungselement, in Form eines mehrteilig aufgebauten Befestigungselementes form- und kraftschlüssig an die Blattfeder anzubinden. Hierbei dienen die Einengungen dazu, den Befestigungsabschnitt derart zu konzeptionieren, dass es bei einer Anbindung von Befestigungselementen zu keiner Beschädigung der die Blattfeder bildenden Fasern kommt. Weiterhin wird es durch diese Einengungen möglich, ungekürzte, also durchgängig verlaufende Fasern zu verwenden, welche eine Erhöhte Kraftaufnahme der gesamten Anordnung ermöglichen sollen.

Aufgabe der vorliegenden Erfindung ist es daher eine gewichtsoptimierte Blattfeder aus Faserverbundwerkstoff bereitzustellen, die in ihrer Federsteifigkeit insbesondere an den Belastungsfall des Bremsens dauerhaltbar angepasst ist.

Die zuvor genannte Aufgabe wird erfindungsgemäß mit einer Kraftfahrzeugachsaufhängung, umfassend eine Blattfeder aus Faserverbundwerkstoff gemäß den Merkmalen in Patentanspruch 1 gelöst. Vorteilhafte Ausführungsvarianten der vorliegenden Erfindung sind Bestandteil der abhängigen Patentansprüche.

Die erfindungsgemäße Kraftfahrzeugachsaufhängung umfassend eine Blattfeder aus Faserverbundwerkstoff und eine Klemmvorrichtung, welche von der Mitte der Blattfeder in Längsrichtung versetzt angeordnet ist und zur Koppelung eines Achsbauteils an die Blattfeder dient, wobei die Blattfeder an ihren Enden jeweils über eine Anbindung an das Kraftfahrzeug gekoppelt ist und die Blattfeder als Längsblattfeder ausgebildet ist und entlang ihrer Mittellängsachse zumindest abschnittsweise voneinander verschiedene Querschnittsgrößen aufweist, ist dadurch gekennzeichnet, dass das Achsrohr in Längsrichtung im Wesentlichen mittig an der Blattfeder angeordnet ist und dass die Blattfeder einen Anbindungsbereich sowie zwei sich von dem Anbindungsbereich zu den Enden der Längsblattfeder erstreckende Äste aufweist, wobei der in Fahrtrichtung hintere Ast gegenüber dem in Fahrtrichtung vorderen Ast eine höhere Querschnittsgröße aufweist.

Die Kraftfahrzeugachsaufhängung ist im Rahmen der Erfindung insbesondere als Starrachsaufhängung ausgebildet, wobei die Räder der Achse lenkbar oder aber unlenkbar sind.

Die Achse selber, mithin das Achsbauteil ist über eine Klemmvorrichtung mit der Blattfeder gekoppelt. Bei der Klemmvorrichtung handelt es sich insbesondere um eine Schellenvorrichtung, die die Blattfeder mindestens formschlüssig umfasst und das Achsbauteil lagefixiert zu der Blattfeder an dieser anordnet.

Die Blattfeder selbst ist wiederum an ihren Enden über eine Anbindung an das Kraftfahrzeug selbst gekoppelt. Die Blattfeder kann dabei direkt an die Kraftfahrzeugkarosserie gekoppelt sein oder aber auch über einen Achshilfsrahmen zunächst mit diesen verbunden sein, wobei der Achshilfsrahmen dann wiederum an das Kraftfahrzeug gekoppelt ist. Die Blattfeder kann über die Anbindung jedoch auch im Falle eines Nutzfahrzeuges an einen Leiterrahmen gekoppelt sein, wobei dann der Aufbau des Nutzfahrzeuges auf den Leiterrahmen aufgesetzt ist.

Die Blattfeder ist erfindungsgemäß als Längsblattfeder ausgebildet, mithin ist sie als längliches Bauteil definiert, dessen Längsrichtung im Wesentlichen in die Fahrtrichtung des Kraftfahrzeuges orientiert angeordnet ist. Die Längsblattfeder kann dabei bis zu wenigen Grad mit ihrer Längsachse von der Kraftfahrzeug X-Richtung abweichen oder aber parallel zu der oder aber in der Kraftfahrzeug X-Richtung angeordnet sein.

Erfindungsgemäß weist die Blattfeder entlang ihrer Mittellängsachse zumindest abschnittsweise voneinander verschiedene Querschnittsgrößen auf, wobei die Querschnittsgrößen den zu erwartenden Belastungszuständen jeweils abschnittsweise optimiert ausgebildet sind. Somit ändert sich nicht nur die Querschnittsgeometrie, sondern auch der jeweilige Querschnittsflächeninhalt, mithin die Anzahl bzw. Dichte der Fasern über die Längsrichtung zumindest abschnittsweise verlaufend. Somit ist es möglich die Längsblattfeder jeweils abschnittsweise in ihrem Federsteifigkeitsverhalten sowie in ihrer Fähigkeit Spannungen aufzunehmen, an die zu erwartenden Spitzenbelastungen sowie Dauerbelastungen anzupassen. Im Ergebnis ist es möglich die Blattfeder gewichtsoptimiert auszubilden, bei gegenüber einer massiv ausgebildeten mit über ihre Länge verlaufendem konstanten Querschnitt ausgebildeten Blattfeder gleichen oder aber erhöhten Festigkeitseigenschaften. Das spezifische Eigengewicht der Blattfeder sinkt hierzu jedoch gleichsam. Im Ergebnis ist die erfindungsgemäße Blattfeder leichter und dauerhaltbarer als eine konventionell hergestellte Blattfeder, wobei sie gleichzeitig die Fahreigenschaften des Kraftfahrzeuges, insbesondere im Bremsverhalten verbessert.

Weiterhin ist die Klemmvorrichtung von der Mitte der Blattfeder in Längsrichtung versetzt angeordnet, wobei das Achsrohr in Längsrichtung im Wesentlichen mittig angeordnet ist. Die Klemmvorrichtung ist somit in Kraftfahrzeug X-Richtung orientiert von der Mitte der Längsblattfeder versetzt angeordnet. Je nach Einbaulage der Achse, kann dies in positiver oder aber negativer X-Richtung geschehen. Hierdurch ist es bereits möglich, die Auswirkungen des S-Schlages zu kompensieren, so dass eine zusätzliche Versteifung des Inneren der Längsblattfeder im Bereich hoher auftretender Schubspannungen durch die Klemmvorrichtung erreicht wird. In der Folge werden die Spitzenwerte der auftretenden Schubspannungen herabgesetzt und die Feder ist dauerhaltbarer.

Zur Kompensation des S-Schlages weist bei einer Kraftfahrzeugachse der in Fahrtrichtung hintere Ast gegenüber dem in Fahrtrichtung vorderen Ast erfindungsgemäß eine höhere Querschnittsgröße auf. Die höhere Querschnittsgröße kann durch eine größere Dicke und/oder Breite der Blattfeder erreicht werden. Als Fahrtrichtung ist jeweils die Hauptfahrtrichtung bei Vorwärtsfahrt im Rahmen der Erfindung zu verstehen. Mithin ist bei der Kraftfahrzeugachse die Querschnittsgröße, also die Querschnittsfläche des hinteren Astes größer als die Querschnittsfläche des vorderen Astes. Hierdurch wird beim Bremsverhalten der zu erwartende S-Schlag an der Längsblattfeder derart kompensiert, dass es beim Bremsen bei Vorwärtsfahrt, was im Betrieb der Regelfall beispielsweise durch einen Bremsvorgang aus hohen Geschwindigkeiten ist, derart kompensiert, dass der Bremsnickvorgang der Kraftfahrzeugkarosserie optimal ausgeglichen wird.

An der Vorderachse taucht die Kraftfahrzeugkarosserie ein, so dass durch den Bremsvorgang maßgeblich der vordere Ast entspannt wird, wohingegen der hintere Ast der Längsblattfeder stärker belastet wird. So kann bevorzugt im Rahmen der Erfindung bei einer Vorderachse der in Fahrtrichtung hintere Ast gegenüber dem in Fahrtrichtung vorderen Ast eine höhere Querschnittsgröße aufweisen. An der Hinterachse findet der gleiche Prozess statt. Folglich ist es denkbar, dass bei einer Hinterachse der in Fahrtrichtung vordere Ast gegenüber dem in Fahrtrichtung hinteren Ast eine höhere Querschnittsgröße aufweist. Die Belastung ist absolut gesehen kleiner als beim vorderen Ast der vorderen Blattfeder, da ein geringerer Anteil der Masse des Autos beim Bremsvorgang auf die Hinterachse drückt. Durch eine gezielt größere Ausbildung der Querschnittsfläche lassen sich die durch den Bremsvorgang entstehenden Spitzenspannungen besser kompensieren, ohne dabei das Gewicht der Längsblattfeder zu erhöhen.

Weiterhin ist das dann an der Klemmvorrichtung gekoppelte Achsrohr wiederum in Längsrichtung, also in Kraftfahrzeug X-Richtung der Längsblattfeder an dieser im Wesentlichen mittig angeordnet. Bezüglich der überwiegend während einer Fahrt auftretenden Radhube in positiver und negativer Kraftfahrzeug Z-Richtung lässt sich hierdurch der Fahrkomfort und die Fahrsicherheit gegenüber einer konventionellen mittig angeordneten Klemmvorrichtung an einer Längsblattfeder erhalten. Beide Arme bzw. Äste der Blattfeder werden somit bei einem regulären Radhub in Z-Richtung gleichsam belastet.

Weiterhin bevorzugt ist das Achsbauteil als Achsrohr ausgebildet, insbesondere als Achsrohr einer Starrachse besonders bevorzugt einer angetriebenen Starrachse. Im Rahmen der Erfindung ist die Kraftfahrzeugaufhängung besonders bevorzugt als Starrachse ausgebildet, wobei die Räder der Starrachse lenkbar oder aber unlenkbar an dieser gekoppelt sind. Im Falle der Koppelung an einer Vorderachse sind die Räder bevorzugt lenkbar, im Falle einer Hinterachse, insbesondere einer angetriebenen Hinterachse sind die Räder bevorzugt nicht lenkbar.

Weiterhin bevorzugt weist die Blattfeder einen Anbindungsbereich auf, sowie sich zwei zu den jeweiligen Enden der Längsblattfeder von dem Anbindungsbereich erstreckende Äste. Der Anbindungsbereich ist der Bereich der Längsblattfeder, der zur Aufnahme der Klemmvorrichtung vorgesehen ist. Im Rahmen der Erfindung ist der Anbindungsbereich besonders bevorzugt flächig ausgebildet, insbesondere eben ausgebildet, so dass die Klemmvorrichtung zumindest überwiegend, bevorzugt vollständig in dem Anbindungsbereich zur Anlage kommt.

Weiterhin bevorzugt ist die Klemmvorrichtung im Anbindungsbereich zusätzlich nicht nur formschlüssig, sondern beispielsweise auch durch einen Klebevorgang stoffschlüssig und/oder kraftschlüssig gekoppelt. Hierdurch wird erreicht, dass die Klemmvorrichtung lagefixiert mit der Blattfeder gekoppelt ist, so dass es sich über einen gesamten Nutzungszeitraum eines Kraftfahrzeuges und bis zu mehreren 100.000 km im Falle eines Nutzfahrzeuges nicht zu einem Verzug oder aber einem Verschieben der Klemmvorrichtung gegenüber der Blattfeder kommt, so dass ein Nachteil auf Spureinstellung erfolgen könnte. Von dem Anbindungsbereich aus erstrecken sich dann jeweils zwei Äste bzw. Arme der Blattfeder zu deren Enden hin. Aufgrund der längsorientierten Einbaulage erstrecken sich dann je ein Ast zur Fahrzeugfront und der andere Ast zum Fahrzeugheck. Weiterhin bevorzugt ist dann die Längsblattfeder an ihren Enden mit dem Kraftfahrzeug über den einen Hilfsrahmen oder aber direkt an die Kraftfahrzeugkarosserie gekoppelt.

Weiterhin bevorzugt ist im Rahmen der Erfindung die Querschnittsgröße des Anbindungsbereiches größer ausgebildet, als die Querschnittsgröße der Äste selber. Gerade im Anbindungsbereich entstehen im Inneren der Längsblattfeder hohe interlaminare Schubspannungen, aufgrund der Einleitung der Bremskräfte in den Bereich der Mittenklemmung. Durch eine größere Querschnittsfläche im Anbindungsbereich wird einer Kompensation dieser Schubspannung Rechnung getragen. Gleichsam ist auch die größere Querschnittsfläche im Anbindungsbereich derart nutzbar, dass zur Koppelung mit der Klemmvorrichtung ein größerer Bereich zur Verfügung steht. Bevorzugt ist der Anbindungsbereich der Längsblattfeder im Querschnitt breiter ausgebildet, als in den Ästen. Insbesondere ist der Anbindungsbereich auch im Querschnitt höher ausgebildet, gegenüber der Querschnittsgeometrie der Äste. Hierdurch verteilen sich die in dem Anbindungsbereich von beiden Ästen eingeleiteten Spannungen und werden kompensiert sodass der Anbindungsbereich kraftflussoptimiert ausgebildet ist, wobei die Spannungskonzentration pro Flächeneinheit durch die größere Querschnittsfläche verringert wird. Mithin ergibt sich eine Längsblattfeder die dauerhaltbarer ausgebildet ist.

Weiterhin bevorzugt ist die Klemmvorrichtung auf dem Anbindungsbereich verschiebbar und/oder justierbar angeordnet. Im Rahmen der Erfindung ist es somit möglich insbesondere zur Einstellung des Fahrwerks, ganz besonders bevorzugt zum Einstellen der Spur und/oder auch des Sturzes, die Klemmvorrichtung, mithin die gesamte Achse zu verschieben und anschließend die Klemmvorrichtung lagefixiert mit der Blattfeder zu koppeln. Im Rahmen der Erfindung kann zwischen Blattfeder und Klemmvorrichtung auch eine Justiervorrichtung ausgebildet sein, die dann zur Justierung, insbesondere zur Feineinstellung nutzbar ist.

Weiterhin bevorzugt ist die Blattfeder mittels eines RTM Verfahrens oder aber mittels eines Prepregprozesses hergestellt. Insbesondere bei Anwendung eines RTM Verfahrens ist es möglich eine einstückige, mithin einlagige Blattfeder auszubilden, so dass diese ebenfalls schubspannungsoptimiert bezüglich der inneren Spannungszustände ausgebildet ist.

Die Blattfeder kann dann auch mehrlagig ausgebildet sein, da die interlaminaren Spannungszustände aufgrund der geometrischen Ausgestaltung kompensiert werden. Unter "mehrlagig" ist eine Blattfeder mit mehreren Einzelblattfedern zu verstehen und/oder auch eine Blattfeder bestehend aus mehreren Textillagen.

Weiterhin besonders bevorzugt sind von dem Anbindungsbereich zu den Ästen sich erstreckende Übergänge ausgebildet, die keine Kanten oder aber keine Querschnittssprünge aufweisen. Der Übergang ist insbesondere mit einem progressiven oder aber degressiven Verlauf fließend ausgebildet. Hierdurch wird in den Übergangsbereichen zwischen Anbindungsbereich und jeweiligem Ast eine Kerbwirkung oder eine sonstige Schwächung vermieden, so dass es hier nicht bei Dauerlastschwingungen zu Ermüdungserscheinungen oder aber Brüchen kommt. Weiterhin bevorzugt ist der Anbindungsbereich an die zu erwartenden Spannungszustände optimiert ausgebildet, insbesondere schubspannungsoptimiert ausgebildet.

Die zuvor genannten Merkmale lassen sich im Rahmen der Erfindung beliebig untereinander kombinieren mit den damit jeweils einhergehenden Vorteilen, ohne dabei den Rahmen der Erfindung zu verlassen.

Weitere Vorteile, Merkmale, Eigenschaften und Aspekte der vorliegenden Erfindung sind Bestandteil der nachfolgenden Beschreibung. Bevorzugte Ausführungsvarianten werden in den schematischen Figuren dargestellt. Diese dienen dem einfachen Verständnis der Erfindung. Es zeigen:
- Figur 1a bis c: eine aus dem Stand der Technik bekannte Blattfeder,
- Figur 2a und b: eine erfindungsgemäße Blattfeder in Seitenansicht und perspektivischer Ansicht, und
- Figur 3a und b: eine Blattfeder, wie sie aus dem Stand der Technik bekannt ist sowie eine erfindungsgemäße Blattfeder in einer Seitenansicht.

In den Figuren werden für gleiche oder ähnliche Bauteile dieselben Bezugszeichen verwendet, auch wenn eine wiederholte Beschreibung aus Vereinfachungsgründen entfällt.

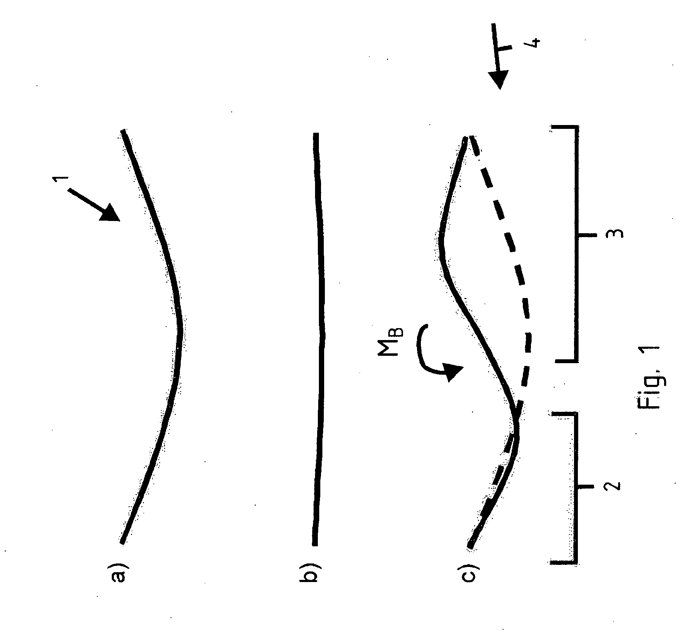

Figur 1a bis c zeigen eine Blattfeder 1 in Seitenansicht, wie sie aus dem Stand der Technik bekannt ist. In Figur 1a ist die Blattfeder 1 im ursprünglichen Zustand dargestellt, in dem sie spannungsfrei ist und einen bogenförmigen Verlauf aufweist. Erfährt die Blattfeder 1 nun den Einbau in ein Kraftfahrzeug und die Beaufschlagung mit der statischen Radlast, so weist sie gemäß Figur 1b einen im Wesentlichen linearen Verlauf auf, in dem ein innerer Spannungszustand vorliegt. Kommt es nun zu einem Bremsvorgang, so erfährt die Blattfeder 1 den Zustand wie in Figur 1c dargestellt. Gestrichelt ist der ursprüngliche aus Figur 1a bekannte spannungsfreie Verlauf der Blattfeder 1 dargestellt. Demgegenüber ist durch Beaufschlagung der Blattfeder 1 mit einem Bremsmoment M_{B} in einem vorderen Bereich 2 ein nahezu spannungsfreier Zustand eingetreten, wohingegen in einem hinteren Bereich 3 ein gegenüber dem ursprünglichen Zustand der Blattfeder 1 deutlich erhöhter Spannungszustand ausgebildet ist. Der Verlauf der Blattfeder 1 in Längsrichtung gleicht einem S, weshalb der Bremsvorgang auch als S-Schlag bezeichnet wird.

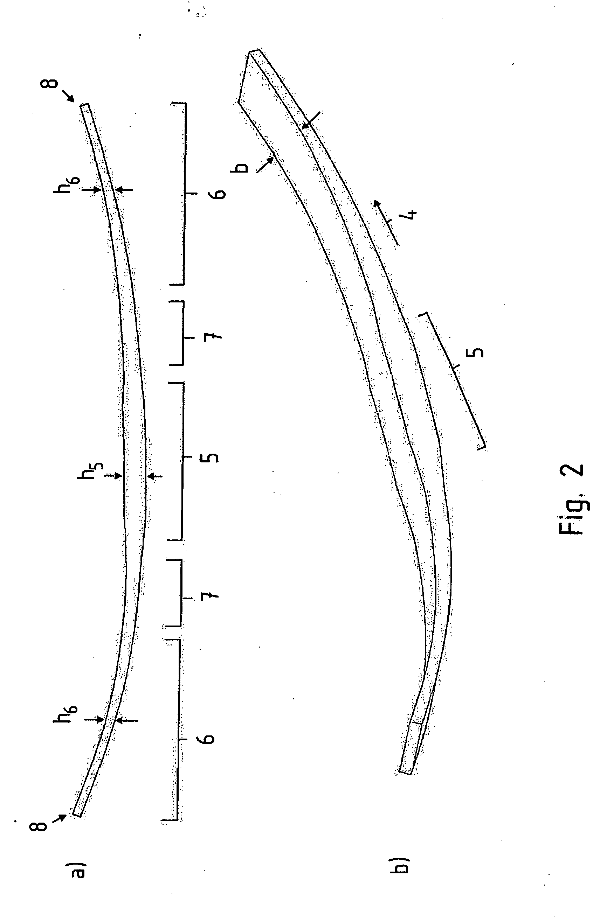

Figur 2a und b zeigen eine erfindungsgemäße Blattfeder 1 in einer Seitenansicht in Figur 2a und einer perspektivischen Ansicht in Figur 2b. Zu erkennen ist, dass ein Anbindungsbereich 5 in seiner Höhe h₅ höher ausgebildet ist, als die Höhe h₆ eines jeweils sich von dem Anbindungsbereich 5 erstreckenden Astes 6. Zwischen dem Anbindungsbereich 5 und dem jeweiligen Ast 6 erstreckt sich weiterhin ein Übergangsbereich 7, wobei der Übergangsbereich 7 von der Höhe h₅ des Anbindungsbereiches 5 zu der Höhe h₆ des jeweiligen Astes 6 ohne Kante, also fließend ausgebildet ist. Hierdurch entstehen keinerlei Kerbwirkungen. Weiterhin dargestellt sind die jeweiligen Enden 8 der Blattfeder 1, an welchen diese mit einem nicht näher dargestellten Kraftfahrzeug gekoppelt werden kann. Ferner dargestellt ist in Figur 2b eine Breite b der Querblattfeder, wobei die Breite b hier dargestellt über den Verlauf in Längsrichtung konstant ausgebildet ist. Sie kann jedoch auch variieren, insbesondere ist die Breite b im Anbindungsbereich 5 größer ausgebildet als die Breite b in den Ästen 6.

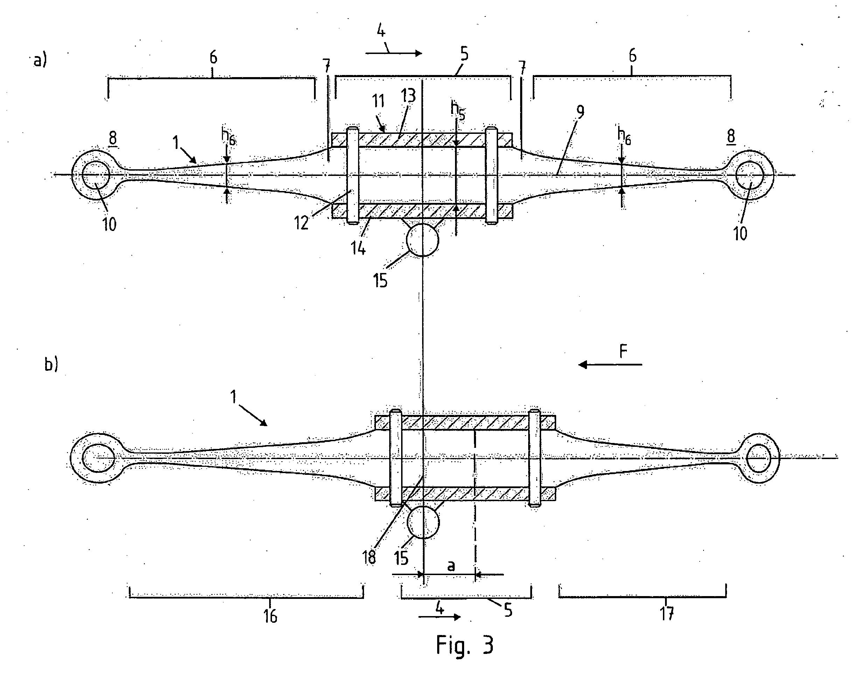

Figur 3a zeigt eine Blattfeder 1 im eingebauten Zustand mit Beaufschlagung der statischen Radlast, wie sie aus dem Stand der Technik bekannt ist. Dargestellt in Figur 3a ist eine Längsblattfeder, mit in Längsrichtung 4 entlang ihrer Mittellängsachse 9 verlaufender variabler Querschnittsfläche, wobei wie hier dargestellt die Höhe h₅ des Anbindungsbereiches 5 größer ausgebildet ist, als die Höhe h₆ der jeweiligen Äste 6. Zwischen den Ästen 6 und dem Anbindungsbereich 5 erstreckt sich weiterhin ein Übergangsbereich 7. Die Äste 6 sind in Figur 3a dargestellt degressiv abnehmend ausgebildet und weisen an ihren jeweiligen Enden 8 ein Lagerauge 10 auf, zur Anbindung an das nicht näher dargestellte Kraftfahrzeug. Weiterhin dargestellt ist eine Klemmvorrichtung 11, die mittels Schraubbolzen 12 eine obere Platte 13 und eine untere Platte 14 miteinander formschlüssig die Blattfeder umfassend lagefixiert. An der unteren Platte 14 ist ferner ein Achsrohr 15 gekoppelt, dass im Wesentlichen in Längsrichtung 4 mittig an der Blattfeder 1 angeordnet ist.

Hierzu alternativ ist in Figur 3b eine erfindungsgemäße Ausführungsvariante dargestellt, bei der ein längerer Ast 16 sowie ein kürzerer Ast 17 ausgebildet sind. Hierdurch wird der Anbindungsbereich 5 mit einem Abstand a exzentrisch von der Mitte der Blattfeder 1 in Längsrichtung 4 versetzt angeordnet.

Das Achsrohr 15 selbst ist wiederum derart exzentrisch an der Klemmvorrichtung angeordnet, dass es in Längsrichtung 4 der Blattfeder 1 mittig angeordnet ist. Je nach Wahl zwischen Vorderachse und Hinterachse zeigt dann der längere Ast 16 oder der kürzere Ast 17 in die Hauptvorwärtsfahrtrichtung.

Figur 3b zeigt die erfindungsgemäße Blattfeder an einer Vorderachse, so dass der linke Ast in Fahrtrichtung F nach vorne orientiert ist und der rechte Ast in Fahrtrichtung F nach hinten orientiert ist. Bei der Anordnung einer Hinterachse wäre die Blattfeder gespiegelt anzuordnen, so dass der längere Ast in Rückwärtsfahrtrichtung zum Kraftfahrzeugende zeigt.

### Bezugszeichen:

- 1 -: Blattfeder
- 2 -: vorderer Bereich
- 3 -: hinterer Bereich
- 4 -: Längsrichtung
- 5 -: Anbindungsbereich
- 6 -: Ast
- 7 -: Übergangsbereich
- 8 -: Ende zu 1
- 9 -: Mittellängsachse
- 10 -: Lagerauge
- 11 -: Klemmvorrichtung
- 12 -: Schraubbolzen
- 13 -: obere Platte
- 14 -: untere Platte
- 15 -: Achsrohr
- 16 -: längerer Ast
- 17 -: kürzerer Ast
- 18 -: Mitte zu 1

- M_{B} -: Bremsmoment
- h₅ -: Höhe zu 5
- h₆ -: Höhe zu 6
- b -: Breite
- a -: Abstand
- F -: Fahrtrichtung

## Patentansprüche

1. Kraftfahrzeugachsaufhängung umfassend eine Blattfeder (1) aus Faserverbundwerkstoff und eine Klemmvorrichtung (11), die von der Mitte der Blattfeder (1) in Längsrichtung versetzt angeordnet ist und zur Koppelung eines Achsbauteils an die Blattfeder (1) dient, wobei die Blattfeder (1) an Ihren Enden (8) jeweils über eine Anbindung an das Kraftfahrzeug gekoppelt ist und die Blattfeder (1) als Längsblattfeder ausgebildet ist, wobei die Blattfeder (1) entlang Ihrer Mittellängsachse (9) zumindest abschnittsweise voneinander verschiedene Querschnittsgrößen aufweist, **dadurch gekennzeichnet,** dass das Achsrohr in Längsrichtung im Wesentlichen mittig an der Blattfeder (1) angeordnet ist und dass die Blattfeder (1) einen Anbindungsbereich (5) sowie zwei sich von dem Anbindungsbereich (5) zu den Enden (8) der Längsblattfeder erstreckende Äste (6) aufweist, wobei der in Fahrtrichtung hintere Ast (6) der Blattfeder gegenüber dem in Fahrtrichtung vorderen Ast (6) eine höhere Querschnittsgröße aufweist.

2. Kraftfahrzeugachsaufhängung nach Anspruch 1, **dadurch gekennzeichnet, dass** das Achsbauteil ein Achsrohr (15) ist, insbesondere ein Achsrohr (15) einer Starrachse, besonders bevorzugt einer angetrieben Starrachse.

3. Kraftfahrzeugachsaufhängung nach Anspruch 1 oder 2, **dadurch gekennzeichnet, dass** bei einer Vorderachse der in Fahrtrichtung hintere Ast (6) gegenüber dem in Fahrtrichtung vorderen Ast (6) eine höhere Querschnittsgröße aufweist.

4. Kraftfahrzeugachsaufhängung nach einem der Ansprüche 1 bis 3, **dadurch gekennzeichnet, dass** die Querschnittsgröße des Anbindungsbereich (5) größer ist, als die Querschnittsgröße der Äste (6).

5. Kraftfahrzeugachsaufhängung nach einem der Ansprüche 1 bis 4, **dadurch gekennzeichnet, dass** die Blattfeder (1) im Anbindungsbereich (5) eine größere Höhe (h₅) aufweist, als in den Ästen (6).

6. Kraftfahrzeugachsaufhängung nach einem der Ansprüche 1 bis 5, **dadurch gekennzeichnet, dass** der Anbindungsbereich (5) breiter ausgebildet ist, als die Äste (6).

7. Kraftfahrzeugachsaufhängung nach einem der Ansprüche 1 bis 6, **dadurch gekennzeichnet, dass** die Klemmvorrichtung (11) auf dem Anbindungsbereich (5) verschiebbar und/oder justierbar angeordnet ist.

8. Kraftfahrzeugachsaufhängung nach einem der Ansprüche 1 bis 7, **dadurch gekennzeichnet, dass** die Blattfeder (1) mittels RTM Verfahren oder mittels eines Prepreg Prozesses hergestellt ist.

9. Kraftfahrzeugachsaufhängung nach einem der Ansprüche 1 bis 8, **dadurch gekennzeichnet**, dass die Blattfeder (1) mehrlagig ausgebildet ist.

10. Kraftfahrzeugachsaufhängung nach einem der Ansprüche 1 bis 9, **dadurch gekennzeichnet, dass** von dem Anbindungsbereich (5) zu den Ästen (6) ein progressiver und/oder degressiver Übergang (7) der Querschnittsgeometrie ausgebildet ist.

11. Kraftfahrzeugachsaufhängung nach einem der Ansprüche 1 bis 10, **dadurch gekennzeichnet, dass** der Anbindungsbereich (5) schubspannungsoptimiert ausgebildet ist.

## Claims

1. Axle suspension for a motor vehicle, comprisinga leaf spring (1) made of fibre composite material and a clamping device (11) which is arranged so as to be offset from the centre of the leaf spring (1) in the longitudinal direction and is used to couple an axle component to the leaf spring (1), the ends (8)of the leaf spring (1) each being coupled to the motor vehicle via a connection and the leaf spring (1) being formed as a longitudinal leaf spring, the leaf spring (1) having cross-sectional dimensions that differ from one another at least in portions along the central longitudinal axis (9) of said leaf spring,**characterised in** thatthe axle tube is arranged substantially in the centre of the leaf spring (1) in the longitudinal direction and in that the leaf spring (1) comprises a connection region (5) and two arms (6) extending from the connection region (5) to the ends (8) of the longitudinal leaf spring, the arm (6) of the leaf spring which is trailing in the direction of travel having a greater cross-sectional dimension than the arm (6) which is leading in the direction of travel.

2. Axle suspension for a motor vehicle according to claim 1, **characterised in that** the axle component is an axle tube (15), in particular an axle tube (15) of a rigid axle, particularly preferably of a driven rigid axle.

3. Axle suspension for a motor vehicle according to either claim 1 or claim 2, **characterised in that**, in a front axle,the arm (6) which is trailing in the direction of travel hasa greater cross-sectional dimension than the arm (6) which is leading in the direction of travel.

4. Axle suspension for a motor vehicle according to any of claims1 to 3, **characterised in** thatthe cross-sectional dimension of the connection region (5) is greater than the cross-sectional dimension of the arms (6).

5. Axle suspension for a motor vehicle according to any of claims1 to 4, **characterised in that** the leaf spring (1) has a greater height (h₅) in the connection region (5) than in the arms (6).

6. Axle suspension for a motor vehicle according to any of claims1 to 5, **characterised in** thatthe connection region (5) is wider than the arms (6).

7. Axle suspension for a motor vehicle according to any of claims1 to 6, **characterised in** thatthe clamping device (11) is arranged so as to be movable and/or adjustable on the connection region (5).

8. Axle suspension for a motor vehicle according to any of claims1 to 7, **characterised in that** the leaf spring (1) is produced by a resin transfer moulding (RTM) process or by a prepreg process.

9. Axle suspension for a motor vehicle according to any of claims1 to 8, **characterised in** thatthe leaf spring (1) is formed from several layers.

10. Axle suspension for a motor vehicle according to any of claims1 to 9, **characterised in that** there is a progressive and/or degressive transition (7) in the cross-sectional geometry from the connection region (5) to the arms (6).

11. Axle suspension for a motor vehicle according to any of claims1 to 10, **characterised in that** the connection region (5) is formed in a shear-stress-optimised manner.

## Revendications

1. Suspension d'essieu de véhicule à moteur comprenant un ressort à lames (1) constitué d'un matériau renforcé de fibres et un dispositif de serrage (11) qui est aménagé décalé du centre du ressort à lames (1) dans la direction longitudinale et sert à coupler un composant d'essieu au ressort à lames (1), dans lequel le ressort à lames (1) est couplé, à ses extrémités (8), au véhicule à moteur respectivement via une attache et le ressort à lames (1) est conformé en ressort à lames longitudinal, dans lequel le ressort à lames (1) présente le long de son axe longitudinal central (9) des sections transversales de grandeurs différentes l'une de l'autre au moins par sections, **caractérisé en ce que** le tube d'essieu est aménagé dans la direction longitudinale sensiblement au centre sur le ressort à lames (1) et le ressort à lames (1) présente une zone d'attache (5) ainsi que deux branches (6) s'étendant de la zone d'attache (5) aux extrémités (8) du ressort à lames longitudinal, dans lequel la branche (6) arrière dans le sens de la marche du ressort à lames présente une coupe transversale de grandeur plus importante que la branche (6) avant dans le sens de la marche.

2. Suspension d'essieu de véhicule à moteur selon la revendication 1, **caractérisé en ce que** le composant axial est un tube d'essieu (15), en particulier un tube (15) d'un essieu rigide, tout particulièrement un essieu rigide entraîné.

3. Suspension d'essieu de véhicule à moteur selon la revendication 1 ou la revendication 2, **caractérisé en ce que**, dans un essieu avant, la branche (6) arrière dans le sens de la marche présente une section transversale de grandeur plus importante que la branche (6) avant dans le sens de la marche.

4. Suspension d'essieu de véhicule à moteur selon l'une quelconque des revendications 1 à 3, **caractérisé en ce que** la section transversale de la zone d'attache (5) est plus grande que la section transversale des branches (6).

5. Suspension d'essieu de véhicule à moteur selon l'une quelconque des revendications 1 à 4, **caractérisé en ce que** le ressort à lames (1) présente dans la zone d'attache (5) une hauteur plus grande (h₅) que dans les branches (6).

6. Suspension d'essieu de véhicule à moteur selon l'une quelconque des revendications 1 à 5, **caractérisé en ce que** la zone d'attache (5) est conformée plus large que les branches (6).

7. Suspension d'essieu de véhicule à moteur selon l'une quelconque des revendications 1 à 6, **caractérisé en ce que** le dispositif de serrage (11) est aménagé de manière à pouvoir se déplacer et/ou s'ajuster sur la zone d'attache (5).

8. Suspension d'essieu de véhicule à moteur selon l'une quelconque des revendications 1 à 7, **caractérisé en ce que** le ressort à lames (1) est fabriqué par un procédé RTM ou au moyen d'un procédé de pré-imprégnation.

9. Suspension d'essieu de véhicule à moteur selon l'une quelconque des revendications 1 à 8, **caractérisé en ce que** le ressort à lames (1) comporte plusieurs couches.

10. Suspension d'essieu de véhicule à moteur selon l'une quelconque des revendications 1 à 9, **caractérisé en ce qu'**une transition progressive et/ou dégressive (7) de la géométrie en section transversale est établie de la zone d'attache (5) aux branches (6).

11. Suspension d'essieu de véhicule à moteur selon l'une quelconque des revendications 1 à 10, **caractérisé en ce que** la zone d'attache (5) est conformée de manière à optimiser la contrainte de poussée.
